# EUROPEAN PATENT APPLICATION

(11) **EP 2 161 188 A1**
(43) Date of publication of application: **10.03.2010**
(21) Application number: 09010138.7
(22) Date of filing: 05.08.2009
(51) Int. Cl.: B62K 11/02, B62J 23/00

(54) **Motorcycle with increased visibility**

(30) Priority: 05.09.2008 JP 2008229095
(71) Applicant: Yamaha Hatsudoki Kabushiki Kaisha, Iwata-shi, Shizuoka-ken 438-8501 (JP)
(72) Inventor: Sumi, Takahiro, Iwata-shi Shizuoka-ken 438-8501 (JP); Hashimoto, Naochika, Iwata-shi Shizuoka-ken 438-8501 (JP)
(74) Representative: Schoppe, Fritz

(57) **Abstract**

In a motor cycle, at least a portion of a head pipe (11), a front portion of an oblique frame portion (12), an upper portion of a lower frame portion (13) from a pivot shaft (28), and a portion of a rear arm (14) that is at the rear of a foot rest (45) are exposed on the outside and are colored in red, see a cross-hatched red-colored belt portion (100), as viewed from one side of the motorcycle with a rider (9) riding on a seat unit (40). A seat unit (40) and a power unit (30) show a color other than red, e.g., black.

## Description

### Field of the Invention

The present invention relates to motorcycles.

### Description of Related Art

It is important for a motorcycle to ensure a range of vision of the surrounding environment viewed by the rider. However, it is equally important that a motorcycle have visibility viewed by other drivers in the surrounding environment, i.e., that the motorcycle can be easily recognized by other drivers in the surrounding environment. In the specification hereinbelow, the visibility of a motorcycle viewed by other vehicles and humans in surrounding environments is referred to as "visibility."

One of the conceivable techniques for improving the visibility of a motorcycle is coloring motorcycle's parts, such as a cover (for example, a front cowl, a side cover, or the like), a fuel tank, a frame, and the like, in a noticeable color.

Among the motorcycles of the type called a sport-type motorcycle, a known motorcycle has a main frame extending from the head pipe toward the pivot shaft and a rear frame extending from the pivot shaft to the rear wheel axle shaft. The entirety or the most part of the main frame and the rear frame is not covered by a cover but is exposed sideways. (For example, see JP 2006-21761 A (Fig. 1)).

Among the motorcycles of the type that has just been mentioned, one in which the most part of its side portions (for example, the most part of the front cowl and the side covers) is colored in a noticeable color shows high visibility when viewed from each side. However, the impression on an observer is affected not only by the dimensions of the colored area but also by its contrast with the other areas. That is, the area of the colored portion does not need to be large as long as the motorcycle has a color scheme such as to give a strong impression on the observer.

Although current motorcycles seem to have sufficient visibility, further improvements in visibility have been desired.

### BRIEF SUMMARY OF THE INVENTION

The present invention has been accomplished in view of the foregoing and other problems. Accordingly, it is an object of the invention to provide a motorcycle that achieves improved visibility offered by a different technique from the conventional technique in which the most part of the cover is colored in a noticeable color.

The present invention provides a motorcycle comprising: a main frame having a head pipe for rotatably supporting a steering shaft, an oblique frame portion extending obliquely in a downward and rearward direction from the head pipe, as viewed from one side of the motorcycle, and a lower frame portion extending downwardly from the oblique frame portion, wherein each of the oblique frame portion and the lower frame portion has a transverse cross-sectional shape such that a width thereof along a direction orthogonal to a vehicle width direction is greater than a width thereof along the vehicle width direction; a power unit, supported by the main frame, at least a portion of which being located below the oblique frame portion and in front of the lower frame portion as viewed from one side of the motorcycle; a rear arm, mounted pivotably to the main frame with a swing shaft and having a transverse cross-sectional shape such that a width thereof along a vertical direction is greater than a width thereof along the vehicle width direction; a rear wheel supported rotatably by the rear arm; a seat unit provided above the rear arm as viewed from one side of the motorcycle and supported by the main frame; and a foot supporting part provided at the rear of the lower frame portion and supported by the main frame, wherein at least a portion of the head pipe, a front portion of the oblique frame portion, a portion of the lower frame portion that is above the swing shaft, and a portion of the rear arm at the rear of the foot supporting part, as viewed from one side of the motorcycle with a rider riding on the seat unit, are exposed on the outside and are colored in red, and the seat unit and the power unit are colored in a color other than red.

The present invention makes available a motorcycle that achieves improved visibility offered by a technique different from the conventional technique in which the most part of the cover is colored in a noticeable color.

### BRIEF DESCRIPTION OF THE DRAWINGS

Fig. 1 is a side view illustrating a motorcycle according to one embodiment of the invention;
Fig. 2(a) is a cross-sectional view taken along line IIa-IIa of Fig. 1, illustrating a transverse cross-sectional view of a main frame;
Fig. 2(b) is a cross-sectional view taken along line IIb-IIb of Fig. 1, illustrating a transverse cross-sectional view of the main frame;
Fig. 3(a) is a cross-sectional view taken along line IIIa-IIIa of Fig. 1, illustrating a transverse cross-sectional view of a rear arm;
Fig. 3(b) is a cross-sectional view taken along line IIIb-IIIb of Fig. 1, illustrating a transverse cross-sectional view of the rear arm;
Fig. 4 is a side view illustrating the main frame;
Fig. 5 is a perspective view illustrating an oblique frame portion, viewed from the back side;
Fig. 6(a) is a side view of the motorcycle, with a red-colored belt portion thereof emphasized; and
Fig. 6(b) is a view illustrating one example of traffic signs.

### DETAILED DESCRIPTION OF THE INVENTION

### Outline of the Embodiments

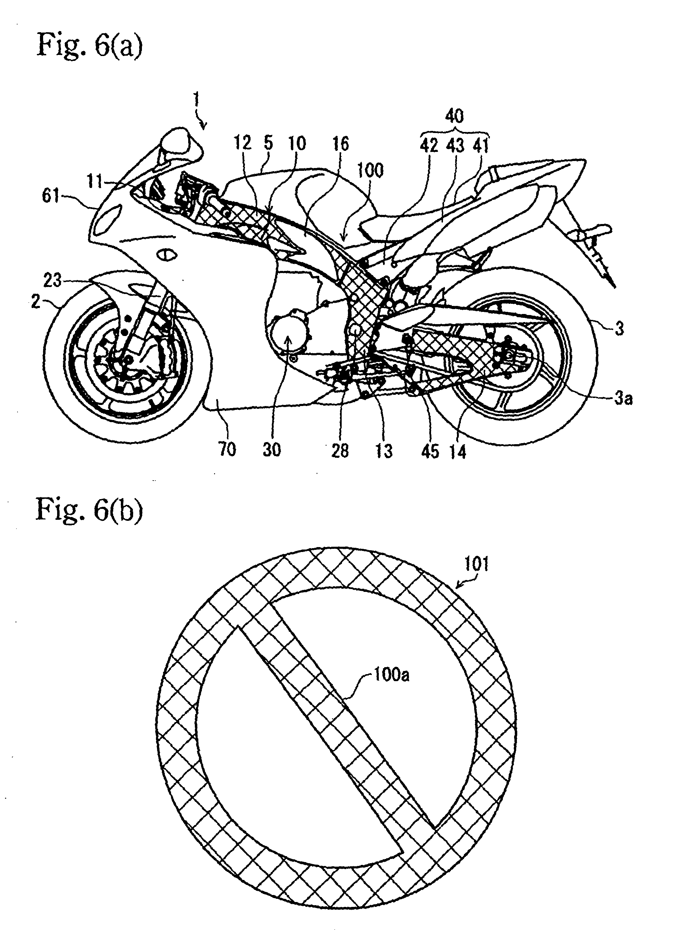

While observing various types of motorcycles that are colored in a variety of colors, the present inventors have noticed that visibility of a motorcycle can be improved by making use of a color scheme. As a result, using an image of a traffic sign that easily attracts human attention, the present inventors have conceived a color scheme that is applicable to motorcycles and can attract human attention. The specific color scheme is a later-described oblique red-colored belt portion 100 (see the cross-hatched portion in Fig. 6). Generally, red is a color that is often used to express such meaning as "warning," "prohibition," and "failure," and it tends to attract human attention easily. In addition, the red color has been used as a color that attracts attention in various fields over long years, and humans tend to draw attention to the red color habitually. From these viewpoints, the present inventors have conceived that predetermined portions of the main frame and the rear arm should be exposed on the outside and be colored in red, while the seat unit and the power unit should be colored in a color other than red. This makes it possible to realize a motorcycle with improved visibility. Hereinbelow, embodiments of the present invention will be described.

### Configuration of the Motorcycle

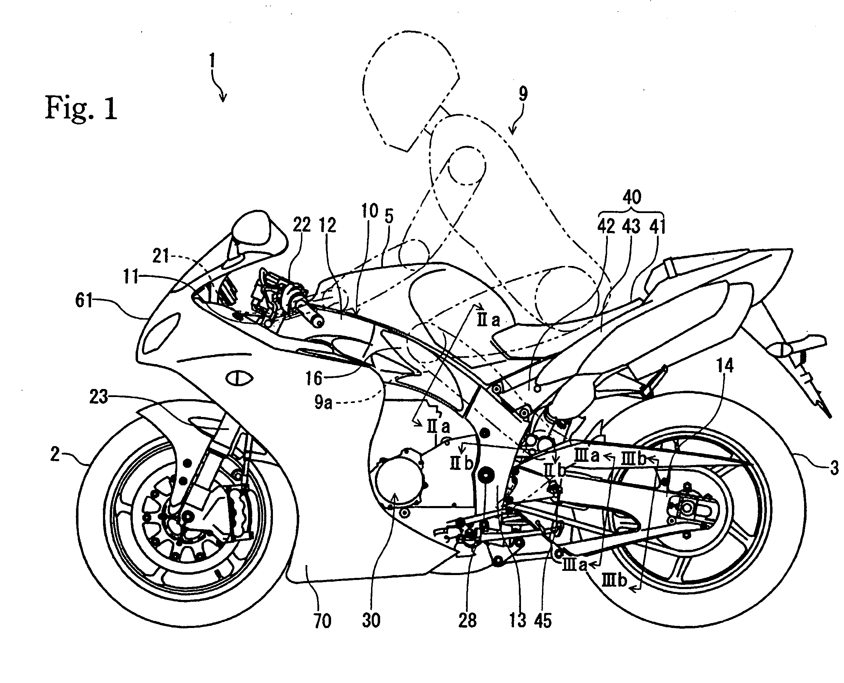

As illustrated in Fig. 1, a motorcycle 1 according to one embodiment is what is called a sport-type motorcycle. The motorcycle 1 has a main frame 10 made of a metallic material. In the present embodiment, the main frame 10 is made of aluminum. However, the material for the main frame 10 is not particularly limited. The main frame 10 may be made of a metallic material other than aluminum, or may be made of a non-metallic material. The main frame 10 has a head pipe 11, an oblique frame portion 12 extending obliquely in a downward and rearward direction, as viewed from one side of the motorcycle, from the head pipe 11, and a lower frame portion 13 extending downwardly from the oblique frame portion 12.

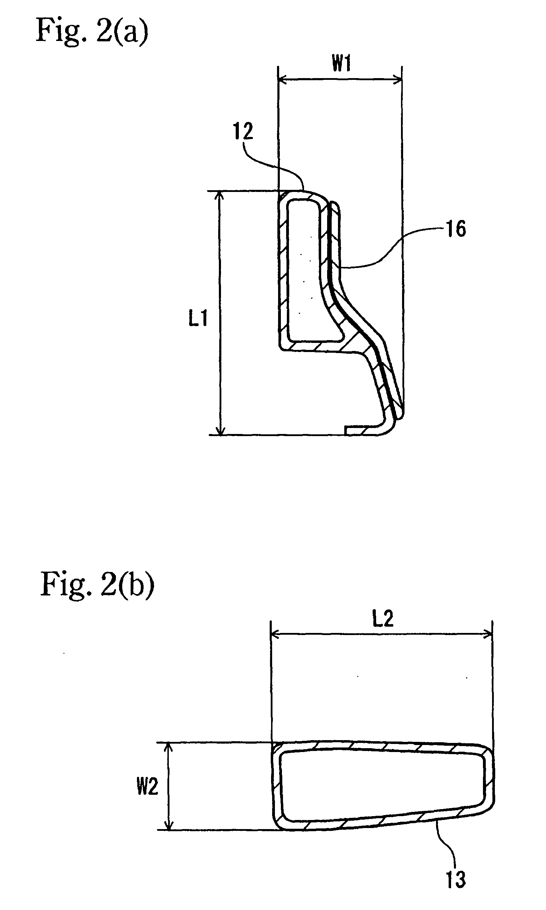

As illustrated in Fig. 2(a), the oblique frame portion 12 has a transverse cross-sectional shape such that its vertical width L1 is greater than its lateral width W1. In addition, as illustrated in Fig. 2(b), the lower frame portion 13 has a transverse cross-sectional shape such that its width L2 along a vehicle longitudinal direction is greater than its width W2 along a vehicle width direction. Accordingly, both the oblique frame portion 12 and the lower frame portion 13 have such a shape that their width along a direction orthogonal to the vehicle width direction is greater than their width along the vehicle width direction (i.e., their lateral width). Thus, each of the oblique frame portion 12 and the lower frame portion 13 has a relatively large area, as viewed from a side of the motorcycle.

A steering shaft 21 is supported rotatably by the head pipe 11. A steering bar 22 is provided at an upper side of the steering shaft 21, and a front fork 23 is provided at a lower side of the steering shaft 21. These components, the steering shaft 21, the steering bar 22, and the front fork 23, constitute a steering unit. A front wheel 2 is supported rotatably at a lower end of the front fork 23.

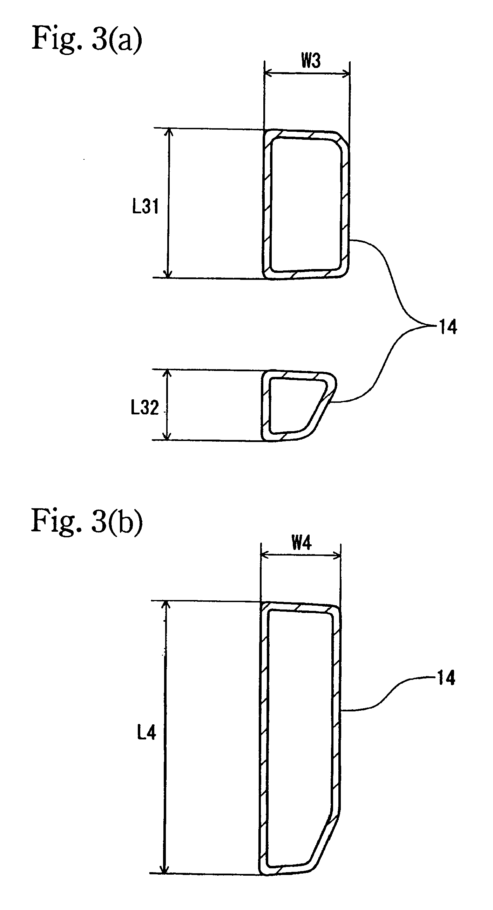

A pivot shaft 28, which is a swing shaft, is provided on the lower frame portion 13. A rear arm 14 is mounted pivotably on the pivot shaft 28. That is, the front end portion of the rear arm 14 is fitted pivotably to the main frame 10 with the pivot shaft 28. A rear wheel 3 is supported rotatably at the rear end of the rear arm 14. As illustrated in Figs. 3(a) and 3(b), the cross-sectional shape of the rear arm 14 is formed in a shape such that its vertical width is greater than its lateral width. Specifically, in the cross section shown in Fig. 3(a), in which the rear arm 14 is divided vertically into two parts, the vertical width L31 + L32 is greater than the lateral width W3. Note that, for such a portion that is vertically divided into two parts, the total width obtained by adding up the two vertical widths is defined as the total vertical width. In the cross section shown in Fig. 3(b) as well, the vertical width L4 is greater than the lateral width W4. Thus, the rear arm 14 has a relatively large area, as viewed from a side of the motorcycle.

As illustrated in Fig. 1, the motorcycle 1 has a power unit 30. The power unit 30 is supported by the main frame 10. An engine, a clutch, a transmission, and so forth (not shown) are provided inside the power unit 30. The power unit 30 is disposed below the oblique frame portion 12 and in front of the lower frame portion 13, as viewed from one side of the motorcycle.

As viewed from one side of the motorcycle, a seat unit 40 is disposed above the rear arm 14. The seat unit 40 has a seat main body 41 on which a rider 9 is to be seated, a rear frame 42 supported by the main frame 10, and a rear side cover 43 for covering the sides of the rear frame 42.

A footrest 45 serving as a foot supporting part is disposed at the rear of the lower frame portion 13. As viewed from one side of the motorcycle, the footrest 45 is disposed at the rear of the pivot shaft 28. The footrest 45 is disposed at the rear of the lower frame portion 13 of the main frame 10. In the present embodiment, each of the footrests 45 is disposed at a position such that substantially the entirety of the lower frame portion 13 is exposed sideways, without being covered by the legs of the rider 9 on the footrests 45.

A fuel tank 5 is provided above the oblique frame portion 12 and in front of the seat main body 41. A front cowl 61 is disposed in front of the head pipe 11. Side cowls 70 are provided respectively at the left and right sides of the front cowl 61.

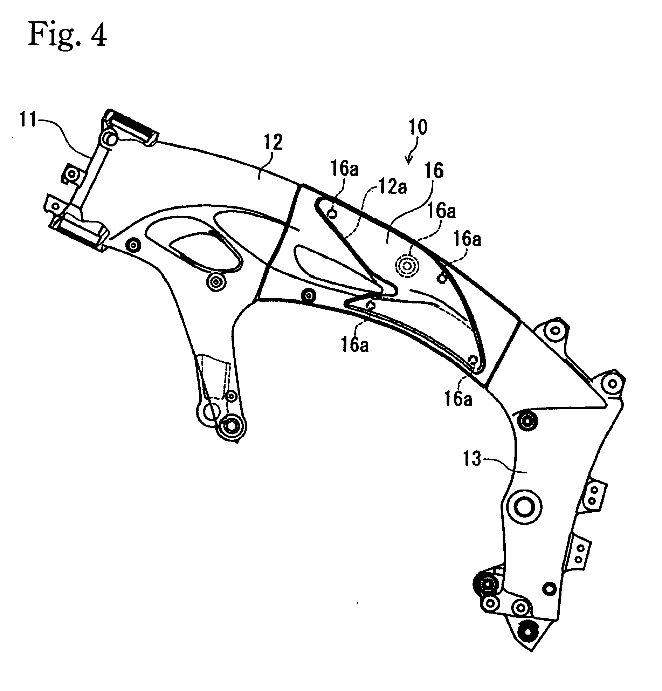

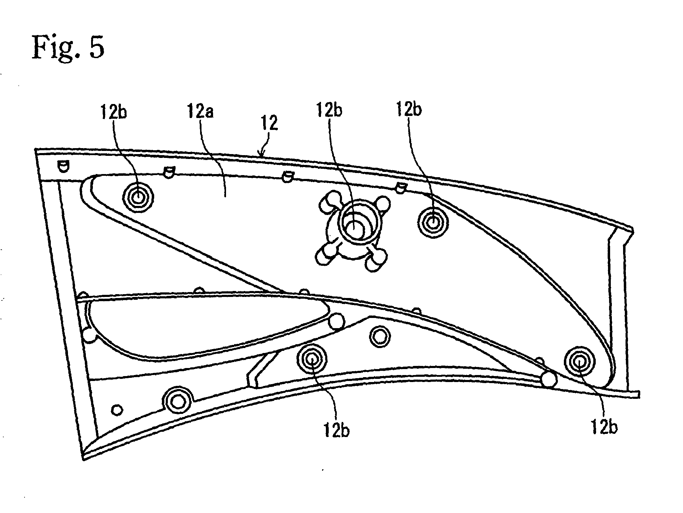

As illustrated in Fig. 1, a heat insulating cover 16 is fitted to the oblique frame portion 12. More specifically, as illustrated in Fig. 4, a recess 12a that is recessed toward the lateral center of the vehicle is formed in a longitudinally mid portion of the oblique frame portion 12. Fig. 5 is a perspective view illustrating the mid portion of the oblique frame portion 12, viewed from the back side thereof (in other words, viewed laterally from the inside of the vehicle). As illustrated in Fig. 5, a plurality of holes 12b are formed in the recess 12a of the oblique frame portion 12. On the other hand, a plurality of protrusions 16a are formed on the back side of the heat insulating cover 16 (see Fig. 4). The protrusions 16a are fitted into the holes 12b, whereby the heat insulating cover 16 is secured to the oblique frame portion 12. In the present embodiment, the heat insulating cover 16 is secured to the oblique frame portion 12 by merely inserting the protrusions 16a into the holes 12b, without using fasteners such as bolts.

By providing the recess 12a in the oblique frame portion 12 and securing the heat insulating cover 16 to the recess 12a, the heat insulating cover 16 can be prevented from greatly protruding outwardly. In the present embodiment, the depth of the recess 12a of the oblique frame portion 12 is substantially equal to the thickness of the heat insulating cover 16, and the heat insulating cover 16 is formed so as not to protrude outwardly from the oblique frame portion 12. The material for the heat insulating cover 16 is not particularly limited as long as it shows higher heat insulation performance than the material for the main frame 10. In the present embodiment, the heat insulating cover 16 is formed of a resin material.

### Color Scheme of the Motorcycle 1

Fig. 6(a) is a side view of the motorcycle 1, and it is a schematic view in which the portions that are colored in red are cross-hatched. In the present embodiment, the main frame 10 is colored in red. The rear arm 14 is also colored in red. The seat unit 40 and the power unit 30 are colored in black. In other words, the seat unit 40 and the power unit 30 are colored in a color other than red. The heat insulating cover 16 is colored in black. It should be noted that the heat insulating cover 16 may of course be colored in red. The front cowl 61 and the side cowls 70 are also colored in a color other than red (for example, in white).

In this way, in the present embodiment, the main frame 10 and the rear arm 14 are colored in red, while the seat unit 40 and the power unit 30 are colored in black. As a result, the motorcycle 1 appears to have a red colored belt portion 100 formed obliquely from the head pipe 11 to the center of the rear wheel 3 (i.e., the center of an axle shaft 3a) in a downward and rearward direction.

Fig. 6(b) shows one example of traffic sign 101, which indicates a no parking zone or the like. This traffic sign example 101 likewise has a red colored belt portion 100a extending obliquely in a downward and rearward direction. In Fig. 6(b) also, the portion colored in red is cross-hatched. The portion that is not cross-hatched shows a color other than red. The traffic sign example 101 of this kind attracts human attention sufficiently even though it has a small area. The present inventors have noticed that this type of traffic sign, especially the red colored belt portion 100a extending obliquely, calls human attention, and have decided to apply such a color scheme to the motorcycle 1. Specifically, the red colored belt portion 100 is formed on the motorcycle 1 according to the just-mentioned color scheme.

It should be noted that the heat insulating cover 16 is colored in black in the present embodiment. However, as illustrated in Fig. 1, the heat insulating cover 16 is disposed at a location where a leg 9a of the rider 9 overlaps with the main frame 10, as viewed from one side of the motorcycle. For this reason, even if the heat insulating cover 16 is colored in a color other than red, the red colored belt portion 100 is formed on the motorcycle 1 as a whole. Thus, it is sufficient that the red colored belt portion 100 is formed as a whole, and a portion of the main frame 10 and the rear arm 14 may be colored in a color other than red. The red colored belt portion 100 may be regarded as formed as a whole if a portion of the head pipe 11, a front portion of the oblique frame portion 12, a portion of the lower frame portion 13 that is above the pivot shaft 28, and a portion of the rear arm 14 that is at the rear of the footrest 45 are colored in red.

### Advantageous Effects of the Embodiment

As described above, the motorcycle 1 according to the present embodiment has the red colored belt portion 100 that passes through substantially the center of the vehicle and slants obliquely, as viewed from one side of the motorcycle (see Fig. 6). Specifically, a portion of the head pipe 11 of the main frame 10, a front portion of the oblique frame portion 12, a portion of the lower frame portion 13 that is above the pivot shaft 28, and a portion of the rear arm 14 that is at the rear of the footrest 45 in the motorcycle 1 are exposed on the outside under the condition that the rider 9 rides on the motorcycle 1, and they are colored in red. On the other hand, the seat unit 40 and the power unit 30 are colored in black. Thus, the motorcycle 1 appears as if the red colored belt portion 100 extending obliquely is formed on the motorcycle 1 when a human looks at the motorcycle 1 from one side. As a result, the motorcycle 1 according to the present embodiment can attract attention of humans around the motorcycle 1, like the traffic sign. Therefore, the visibility of the motorcycle 1 can be improved by the color scheme alone even without adding a new component part to the motorcycle 1.

It should be noted that the seat unit 40 and the power unit 30 may be in a color other than black as long as it is in a color other than red. In addition, in the seat unit 40, the seat main body 41, the rear frame 42, and the rear side cover 43 may be in different colors that are colors other than red. However, it is preferable that the seat unit 40 and the power unit 30 be a color that makes a red color more noticeable. According to the present embodiment, the seat unit 40 and the power unit 30 are black, so the contrast with a red color is significant and the red colored belt portion 100 becomes more noticeable. Therefore, the visibility of the motorcycle 1 can be improved further.

In the present embodiment, the heat insulating cover 16 is secured to the oblique frame portion 12 of the main frame 10. As illustrated in Fig. 1, the oblique frame portion 12 comes into contact with a portion of the leg 9a of the rider 9. However, according to the present embodiment, the heat insulating cover 16 blocks the heat of the oblique frame portion 12. Therefore, the legs 9a of the rider 9 cannot become exposed to high temperature heat even if the temperature of the oblique frame portion 12 becomes high. In particular, the main frame 10 is formed of a metallic material (specifically aluminum) in the present embodiment, but the insulating cover 16 is formed of a resin material. Therefore, the heat of the main frame 10 can be blocked effectively by the heat insulating cover 16, although the main frame 10 tends to be heated to high temperature.

A plurality of protrusions 16a (see Fig. 4) are formed on the back side of the heat insulating cover 16, and a plurality of holes 12b are formed on the oblique frame portion 12 of the main frame 10. The heat insulating cover 16 is secured to the oblique frame portion 12 by inserting the protrusions 16a into the holes 12b. Thus, fasteners such as bolts and nuts are unnecessary. Therefore, the heat insulating cover 16 can be fitted to the oblique frame portion 12 easily. The positional relationship between the protrusions 16a and the holes 12b may be opposite. Specifically, a plurality of protrusions 16a may be formed on the oblique frame portion 12 and a plurality of holes 12b may be formed in the heat insulating cover 16 so that the heat insulating cover 16 can be secured to the oblique frame portion 12 by inserting the protrusions 16a into the holes 12b.

Moreover, the recess 12a is formed in a portion of the oblique frame portion 12, and the heat insulating cover 16 is secured in the recess 12a. This prevents the heat insulating cover 16 from protruding outwardly. In the present embodiment, the heat insulating cover 16 is configured so as not to protrude outwardly from the oblique frame portion 12. This prevents the heat insulating cover 16 from sticking out.

### Other Embodiments

It should be noted that the way of coloring the main frame 10 and the rear arm 14 is not limited in any way, as long as the main frame 10 and the rear arm 14 are colored in red as a result. For example, a material in a red color may be provided on the surface of the materials therefor. Alternatively, the surface of the materials may be changed into a red color. The method for coloring is not limited in any way. For example, a paint in a red color may be applied onto the material, or a film in a red color may be formed by, for example, vapor deposition. Furthermore, the materials themselves are in a red color. A transparent or semi-transparent protective film may be further formed on the red color. The red may be either glossy red or non-glossy red.

The term "red" in the foregoing embodiments means a color in which H = 4.58R, V = 3.82, and C = 10.11 according to the Munsell color system, which specifies colors according to three color attributes, hue (H), value (V), and chroma (C). Likewise, the "black" is a color in which H = 9.6PB, V = 2.9, and C = 0.2 according to the Munsell color system. In addition, according to the L*a*b*color system, in which colors are specified using lightness (L*) and chromaticity (a* and b*) indicating hue and chroma, the red shows L* = 22.30, a* = 27.21, and b* = 8.39 and the black shows L* = 24.95, a* = -0.25, and b* = -1.05, when light is applied to a sample at an angle of 45 degrees with respect to the line normal to the sample surface and the light is received in the direction normal to the sample surface.

In the present specification, the "red" means, in the Munsell color system, a color having a hue (H) in the range from 2.5RP to 10RP, the entire range of R, and from the minimum value of YR to 7.5YR, and it is not limited by value (V) or chroma (C). The term "black" means a color having a value of 3 or less, and it is not limited by hue or chroma in the Munsell color system. According to the L*a*b* color system, the red is not limited by lightness (L*) but a color within the range a* = 15 to 60 and b* = -30 to 50, and the black includes one with a* = -60 to 25 and b* = -60 to 25, and L* = 35 or less.
Only selected embodiments have been chosen to illustrate the present invention. To those skilled in the art, however, it will be apparent from the foregoing disclosure that various changes and modifications can be made herein without departing from the scope of the invention as defined in the appended claims. Furthermore, the foregoing description of the embodiments according to the present invention is provided for illustration only, and not for limiting the invention as defined by the appended claims and their equivalents.

## Claims

1. A motorcycle comprising:
a main frame having a head pipe for rotatably supporting a steering shaft, an oblique frame portion extending obliquely from the head pipe in a downward and rearward direction, as viewed from one side of the motorcycle, and a lower frame portion extending downwardly from the oblique frame portion, wherein each of the oblique frame portion and the lower frame portion has a transverse cross-sectional shape such that a width thereof along a direction orthogonal to a vehicle width direction is greater than a width thereof along the vehicle width direction;
a power unit, supported by the main frame, at least a portion of which is located below the oblique frame portion and in front of the lower frame portion, as viewed from one side of the motor cycle;
a rear arm, mounted pivotably to the main frame with a swing shaft and having a transverse cross-sectional shape such that a width thereof along a vertical direction is greater than a width thereof along the vehicle width direction;
a rear wheel supported rotatably by the rear arm;
a seat unit provided above the rear arm, as viewed from one side of the motorcycle, and supported by the main frame; and
a foot supporting part provided at the rear of the lower frame portion and supported by the main frame, wherein
at least a portion of the head pipe, a front portion of the oblique frame portion, a portion of the lower frame portion that is above the swing shaft, and a portion of the rear arm at the rear of the foot supporting part, as viewed from one side of the motorcycle with a rider riding on the seat unit, are exposed on the outside and are colored in red, and the seat unit and the power unit are colored in a color other than red.

2. The motorcycle according to claim 1, wherein the seat unit and the power unit are colored in black.

3. The motorcycle according to claim 1, further comprising a heat insulating cover secured to the oblique frame portion.

4. The motorcycle according to claim 3, wherein:
the main frame is made from a metallic material; and
the heat insulating cover is made from a resin material.

5. The motorcycle according to claim 4, wherein:
one of the heat insulating cover and the oblique frame portion of the main frame has a plurality of protrusions, and the other one has a plurality of holes; and
the heat insulating cover is secured to the oblique frame portion by inserting the protrusions into the holes.

6. The motorcycle according to claim 4, wherein:
a recess is formed in a portion of the oblique frame portion of the main frame; and
the heat insulating cover is secured in the recess.

## Amended claims

### Amended claims in accordance with Rule 137(2) EPC.

**1.** A motorcycle comprising:
a main frame (10) having a head pipe (11) for rotatably supporting a steering shaft (21), an oblique frame portion (12) extending obliquely from the head pipe (11) in a downward and rearward direction, as viewed from one side of the motorcycle (1), and a lower frame portion (13) extending downwardly from the oblique frame portion (12), wherein each of the oblique frame portion (12) and the lower frame portion (13) has a transverse cross-sectional shape such that a width (L1, L2) thereof along a direction orthogonal to a vehicle width direction is greater than a width (W1, W2) thereof along the vehicle width direction;
a power unit (30), supported by the main frame (10), at least a portion of which is located below the oblique frame portion (12) and in front of the lower frame portion (13), as viewed from one side of the motorcycle (1);
a rear arm (14), mounted pivotably to the main frame (10) with a swing shaft (28) and having a transverse cross-sectional shape such that a width (L31, L32, L4) thereof along a vertical direction is greater than a width (W3, W4) thereof along the vehicle width direction;
a rear wheel (3) supported rotatably by the rear arm (14);
a seat unit (40) provided above the rear arm (14), as viewed from one side of the motorcycle (1), and supported by the main frame (10); and
a foot supporting part (45) provided at the rear of the lower frame portion (13) and supported by the main frame (10); and
a red colored belt portion (100) that slants obliquely, as viewed from one side of the motorcycle (1),
wherein the red colored belt portion (100) comprises at least a portion of the head pipe (11), a front portion of the oblique frame portion (12), a portion of the lower frame portion (13) that is above the swing shaft (28), and a portion of the rear arm (14) at the rear of the foot supporting part (45), that are exposed on the outside, as viewed from one side of the motorcycle (1) with a rider (9) riding on the seat unit (40), and that are colored in red, and
wherein the seat unit (40) and the power unit (30) are colored in a color other than red.

**2.** The motorcycle according to claim 1, wherein the seat unit (40) and the power unit (30) are colored in black.

**3.** The motorcycle according to claim 1, further comprising a heat insulating cover (16) secured to the oblique frame portion (12).

**4.** The motorcycle according to claim 3, wherein:
the main frame (10) is made from a metallic material; and
the heat insulating cover (16) is made from a resin material.

**5.** The motorcycle according to claim 4, wherein:
one of the heat insulating cover (16) and the oblique frame portion (12) of the main frame (10) has a plurality of protrusions, and the other one has a plurality of holes; and
the heat insulating cover (16) is secured to the oblique frame portion (12) by inserting the protrusions into the holes.

**6.** The motorcycle according to claim 4, wherein:
a recess is formed in a portion of the oblique frame portion (12) of the main frame (10); and
the heat insulating cover (16) is secured in the recess.
